# EUROPEAN PATENT APPLICATION

(11) **EP 2 050 717 A1**
(43) Date of publication of application: **22.04.2009**
(21) Application number: 07791793.8
(22) Date of filing: 26.07.2007
(51) Int. Cl.: C01B 25/42, H01M 8/02, H01M 8/10

(54) **METAL PHOSPHATE AND METHOD FOR PRODUCING THE SAME**

(30) Priority: 28.07.2006 JP 2006205874
(71) Applicant: Sumitomo Chemical Company, Limited, Tokyo 104-8260 (JP)
(72) Inventor: HIBINO, Takashi, Seto-shi Aichi 489-0918 (JP); TANAKA, Toshihiko, Inashiki-gun Ibaraki 300-0331 (JP); HATTORI, Takeshi, Abiko-shi Chiba 270-1175 (JP)
(74) Representative: Duckworth, Timothy John
(86) International application number: PCT/JP2007/065113
(87) International publication number: WO 2008/013315

(57) **Abstract**

A metal phosphate having high proton conductivity which is useful for a fuel cell having higher output, and a method for producing such a metal phosphate are provided. The method for producing a metal phosphate is a metal phosphate production method using a compound containing M, a compound containing J¹, and a compound containing P, as raw materials, wherein M represents at least one selected from the group consisting of group 4A and group 4B elements in the long form of the periodic table, J¹ represents at least one selected from the group consisting of group 3A, group 3B, group 5A and group 5B elements in the long form of the periodic table, the compound containing J¹ is composed of at least one selected from hydroxides of J¹, halides of J¹ and nitrate of J¹.

## Description

### TECHNICAL FIELD

The present invention relates to a metal phosphate and a method for producing the same. More specifically, the present invention relates to a proton-conductive metal phosphate used as a solid electrolyte for fuel cells, and a method for producing the same.

### BACKGROUND ART

Metal phosphates are known to have proton conductivity, and used as a solid electrolyte in fuel cells. Known as the solid electrolyte are polymers, phosphoric acid, molten salts and solid oxides, and fuel cells using them are investigated. Of these solid electrolytes, solid polymer type fuel cells using polymers (PEFC: Polymer Electrolyte Fuel Cell) are operable at low temperatures of from room temperature to about 100°C, easily formed into film and receive little influence by carbon dioxide, thus, said to be suitable for portable electric sources or small size stationary electric sources, among these solid electrolytes. However, since solid polymer type fuel cells are operated at low temperatures, a large amount of platinum is necessary as a catalyst, generating interference against popularization thereof from the standpoint of securing of resources and cost. In contrast, solid oxide fuel cells using a solid oxide such as zirconia or the like as a solid electrolyte (SOFC: Solid Oxide Fuel Cell) are operated at high temperatures of about 900 to 1000°C, thus, there is no necessity of use of platinum as a catalyst, catalyst poisoning is solved and high output is expected. Such solid oxide fuel cells are said to be suitable for large scale stationary electric sources because of necessity of high operation temperatures, among these solid electrolytes.

Under such conditions, metal phosphates show proton conductivity at temperatures (low to middle temperatures) lower than the operation temperature of zirconia though the metal phosphates are solid oxides, and provide a possibility of reduction of the use amount of platinum or displacement thereof and solution of catalyst poisoning, thus, are expected for portable electric sources to be mounted on automobiles and the like or small size stationary electric sources.

As conventional proton-conductive metal phosphates, JP-A No. 2005-294245 discloses specifically SnP₂O₇.

However, the conventional metal phosphate SnP₂O₇ has insufficient proton conductivity.

### DISCLOSURE OF THE INVENTION

The present invention has an object of providing a metal phosphate having high proton conductivity which is useful for a fuel cell having higher output, and a method for producing the metal phosphate.

The present inventors have intensively studied and resultantly completed the present invention.

That is, the present invention provides the following inventions.
<1> A method for producing a metal phosphate, using a compound containing M, a compound containing J¹, a compound containing P, as raw materials,
   wherein M represents at least one selected from the group consisting of group 4A and group 4B elements in the long form of the periodic table,
   J¹ represents at least one selected from the group consisting of group 3A, group 3B, group 5A and group 5B elements in the long form of the periodic table, and
   the compound containing J¹ is composed of at least one selected from the group consisting of hydroxides of J¹, halides of J¹ and nitrate of J¹.
<2> The production method according to the above-described <1>, wherein the compound containing P is phosphoric acid.
<3> The production method according to the above-described <2>, comprising the steps of (a) and (b) in this order:
   (a) reacting a compound containing M, a compound containing J¹ and phosphoric acid to obtain a reaction product,
   (b) thermally treating the reaction product.
<4> The production method according to any one of the above-described <1> to <3>, wherein the compound containing J¹ is a hydroxide of J¹.
<5> The production method according to any one of the above-described <1> to <4>, wherein J¹ contains at least Al.
<6> A metal phosphate obtained by the production method as described in any one of the above-described <1> to <5>.
<7> A metal phosphate, wherein when a diffraction peak having maximum intensity is referred to as diffraction peakₘₐₓ in a powder X-ray diffraction pattern having a diffraction angle 2θ in the range of 20° to 90° obtained by powder X-ray diffraction measurement using CuKα as a radiation source, the diffraction peakₘₐₓ is present in the range of 21° to 23° of diffraction angle 2θ and the diffraction peak is substantially not present in the range of 25.5° to 26.5° of diffraction angle 2θ.
<8> The metal phosphate according to the above-described <7>, which is a compound containing M, P and O,
   wherein M represents at least one selected from the group consisting of group 4A and group 4B elements in the long form of the periodic table,
   a part of M is substituted with a dopant element J¹,
   J¹ represents at least one selected from the group consisting of group 3A, group 3B, group 5A and group 5B elements in the long form of the periodic table.
<9> The metal phosphate according to the above-described <8>, substantially represented by the formula (3):

   M₁₋ₓJ¹ₓP₂O₇ (3)

   wherein x in the formula (3) is from not less than 0.001 to not more than 0.5, and M and J¹ have the same meanings as described above.
<10> The metal phosphate according to the above-described <8> or <9>, wherein J¹ contains at least Al.
<11> The metal phosphate according to any one of the above-described <8> to <10>, wherein J¹ represents Al.
<12> The metal phosphate according to any one of the above-described <8> to <11>, wherein M represents at least one selected from the group consisting of Sn, Ti, Si, Ge, Pb, Zr and Hf.
<13> The metal phosphate according to any one of the above-described <8> to <12>, wherein M represents Sn.
<14> A film comprising the metal phosphate according to any one of the above-described <6> to <13>, and a binder.
<15> The film according to the above-described <14>,
   wherein the binder is a fluorine resin.
<16> The film according to the above-described <15>,
   wherein the fluorine resin is polytetrafluoroethylene.
<17> A fuel cell having as a solid electrolyte the metal phosphate according to any one of the above-described <6> to <13> or the film according to any one of the above-described <14> to <16>.

### BRIEF DESCRIPTION OF DRAWINGS

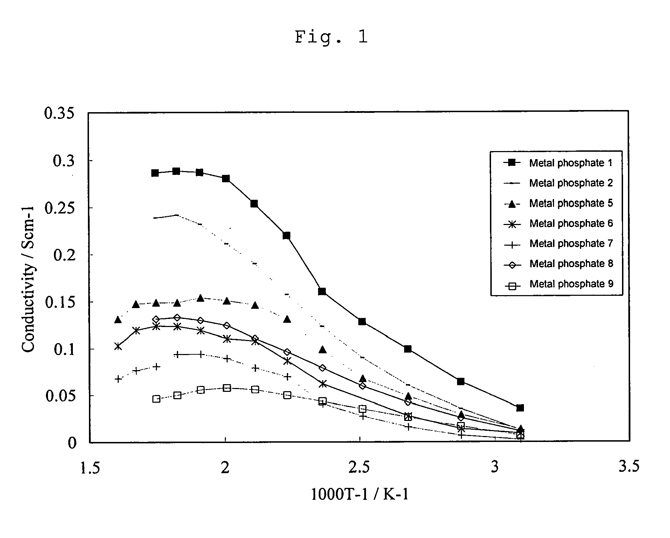

Fig. 1 shows temperature-dependency of proton conductivity of metal phosphates 1, 2, 5, 6, 7, 8 and 9 in examples and comparative examples. In Fig. 1, T represents absolute temperature (K).

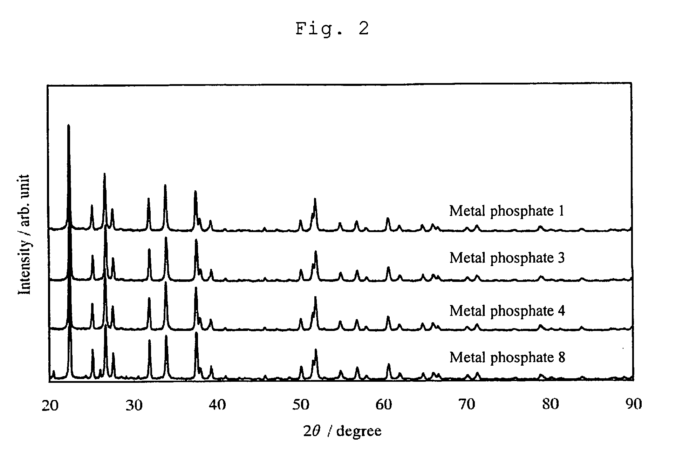

Fig. 2 shows a powder X-ray diffraction pattern (diffraction angle 2θ = 20° to 90°) obtained by performing powder X-ray diffraction measurement using CuKα as a radiation source, of metal phosphates 1, 3, 4 and 8 in examples and comparative examples. Substantially no diffraction peak is present in the range of 25.5° to 26.5° of diffraction angle 2θ, in metal phosphates 1, 3 and 4 synthesized using a hydroxide of J¹, halide of J¹ and nitrate of J¹, as the compound containing J¹.

### MODE FOR CARRYING OUT THE INVENTION

The present invention provides a method for producing a metal phosphate, using a compound containing M
wherein M represents at least one selected from the group consisting of group 4A and group 4B elements in the long form of the periodic table,
a compound containing J¹,
wherein J¹ represents at least one selected from the group consisting of group 3A, group 3B, group 5A and group 5B elements in the long form of the periodic table, and
a compound containing P, as raw materials,
wherein the compound containing J¹ is composed of at least one selected from the group consisting of hydroxides of J¹, halides of J¹ and nitrate of J¹. A metal phosphate having high proton conductivity can be produced by the above-described production method.

The compound containing M may be selected appropriately depending on the kind of M, and oxides can be used, or those which can be decomposed and/or oxidized at high temperatures to become oxides such as hydroxides, carbonates, nitrates, halides, oxalates and the like can be used. When, for example, Sn is used as M, various tin oxides and hydrates thereof can be used, and tin dioxide or its hydrate can be preferably used.

As the compound containing P, phosphoric acid, phosphonic acid and the like are mentioned, and preferable from the standpoint of reactivity with M and J¹ is phosphoric acid. As the phosphoric acid, usually, a concentrated phosphoric acid aqueous solution having a concentration of 50% or more is used, and preferable from the standpoint of operability is a 80 to 90% concentrated phosphoric acid aqueous solution.

Examples of the hydroxide of J¹ include aluminum hydroxide, gallium hydroxide, scandium hydroxide, ytterbium hydroxide, yttrium hydroxide, lanthanum hydroxide and indium hydroxide. In the present invention, also oxyhydroxides such as gallium oxyhydroxide and the like are used as hydroxides. Examples of the halide of J¹ include chlorides of J¹ such as aluminum chloride, gallium chloride, scandium chloride, ytterbium chloride, yttrium chloride, lanthanum chloride, cerium chloride, niobium chloride and the like. Examples of the nitrate of J¹ include aluminum nitrate, gallium nitrate, scandium nitrate, ytterbium nitrate, yttrium nitrate, lanthanum nitrate and cerium nitrate. Of them, hydroxides of J¹ are preferable.

Using the above-described raw materials, a metal phosphate can be produced by a method including the steps of (a) and (b) in this order:
(a) reacting a compound containing M, a compound containing J¹ and phosphoric acid, to obtain a reaction product.
(b) thermally treating the reaction product.

In the step (a), the reaction temperature is appropriately selected depending on the composition of the metal phosphate to be synthesized, and usually, temperatures in the range of 200 to 400°C are usually used. When, for example, M contains Sn, temperatures in the range of 250 to 350°C are preferably used, temperatures in the range of 270 to 330°C are more preferably used. In the reaction, it is advantageous to carry out mixing sufficiently by stirring. From the standpoint of the operability of the resultant reaction product, it is effective to add a suitable amount of water in the reaction in some cases, for maintaining the suitable viscosity of the reaction product and preventing solidification thereof. The reaction time is appropriately selected depending on the composition of the metal phosphate to be synthesized, and times as long as possible are advantageous. If productivity is taken into consideration, times in the range of 1 to 20 hours are preferable when M is Sn.

The reaction product to be obtained in the step (a) is in the form of paste, and a metal phosphate can be obtained by thermally treating this reaction product in the step (b). The thermal treatment temperature is appropriately selected depending on the composition of the metal phosphate to be synthesized, and when, for example, M is Sn, temperatures in the range of 500 to 800°C are preferable, temperatures in the range of 600 to 700°C are more preferable, temperatures in the range of 630 to 680°C are further more preferable. The thermal treatment time is appropriately selected depending on the composition of the metal phosphate to be synthesized, and when, for example, M is Sn, times in the range of 1 to 20 hours are usual, times in the range of 1 to 5 hours are preferable, times in the range of 2 to 5 hours are more preferable.

In the above-described production method, hydroxides, nitrates and halides of J¹ can be used as the compound containing J¹. For example, when J¹ contains Al, for example, aluminum hydroxide (Al(OH)₃) can be used.

The metal phosphate of the present invention obtained by the above-described production method has high proton conductivity. The present invention provides a metal phosphate, wherein when a diffraction peak having maximum intensity is referred to as diffraction peakₘₐₓ in a powder X-ray diffraction pattern having a diffraction angle 2θ in the range of 20° to 90° obtained by powder X-ray diffraction measurement using CuKα as a radiation source, the diffraction peakₘₐₓ is present in the range of 21° to 23° of diffraction angle 2θ and the diffraction peak is substantially not present in the range of 25.5° to 26.5° of diffraction angle 2θ. The above-described substantially no presence of the diffraction peak in the range of 25.5° to 26.5° of diffraction angle 2θ means specifically that when the intensity of the above-described diffraction peakₘₐₓ present in the range of 21° to 23° of diffraction angle 2θ is represented by Iₚ and the intensity of the diffraction peak present in the range of 25.5° to 26.5° of diffraction angle 2θ is represented by Iᵢ, a value of Iᵢ/Iₚ is not more than 0.001.

The metal phosphate of the present invention is preferably a compound containing M, P and O, wherein M represents at least one selected from the group consisting of group 4A and group 4B elements in the long form of the periodic table, and a part of M is substituted with a dopant element J¹, and J¹ represents at least one selected from the group consisting of group 3A, group 3B, group 5A and group 5B elements in the long form of the periodic table. The metal phosphate of the present invention has higher proton conductivity owing to the above-described constitution.

Examples of the compound containing M, P and O,
wherein M has the same meaning as described above include compounds such as orthophosphates, pyrophosphates, and specifically, tin phosphate, titanium phosphate, silicon phosphate, germanium phosphate, zirconium phosphate. In the present invention, pyrophosphates can be preferably used among the above-described compounds, and the pyrophosphate is substantially represented by the formula (1).

MP₂O₇ (1)

The metal phosphate of the present invention is preferably represented substantially by the formula (3), for having higher proton conductivity,

M₁₋ₓJ¹ₓP₂O₇ (3)

wherein x in the formula (3) is from not less than 0.001 to not more than 0.5, M represents at least one selected from the group consisting of group 4A and group 4B elements in the long form of the periodic table, and J¹ represents at least one selected from the group consisting of group 3A, group 3B, group 5A and group 5B elements in the long form of the periodic table.

Substantial representation by the formula (3) means that: at the composition ratio of the formula (3), namely, at the molar ratio of M:J¹:P:O of (1-x):x:2:7, components P and O may be increased or decreased in slight proportion with respect to respective molar ratios of 2 and 7, in a range not disturbing the effect. Slight proportion is usually within about 10%, depending on the kind of M and J¹ to be used. It is preferable that this proportion is smaller.
x in the formula (3) corresponds to the substitution proportion of a dopant element J¹, and is usually from not less than 0.001 to not more than 0.5, preferably from not less than 0.001 to not more than 0.3, more preferably from not less than 0.02 to not more than 0.3, further more preferably from not less than 0.02 to not more than 0.2, depending on the kind of M. When M represents Sn and J¹ represents Al, x is preferably from not less than 0.01 to not more than 0.1, more preferably from not less than 0.02 to not more than 0.08, further more preferably from not less than 0.03 to not more than 0.07, for having higher proton conductivity.

M in the formula (3) represents at least one selected from the group consisting of group 4A and group 4B elements in the long form of the periodic table, and at least one selected from the group consisting of Sn, Ti, Si, Ge, Pb, Zr and Hf are preferably used. M represents more preferably at least one selected from the group consisting of Sn, Ti and Zr, further more preferably Sn and/or Ti, particularly preferably Sn, from the standpoint of stability and proton conductivity of the metal phosphate.

J¹ in the formula (3) represents at least one selected from the group consisting of group 3A, group 3B, group 5A and group 5B elements in the long form of the periodic table and preferably at least contains an element selected from B, Al, Ga, In, Sc, Yb, Y, La, Ce, Sb, Bi, V, Ta and Nb, more preferably at least one selected from the group consisting of B, Al, Ga, In, Sc, Yb, Y, La, Ce, Sb, Bi, V, Ta and Nb, further more preferably at least one selected from B, Al, Ga, In, Sc, Y, La and Nb, particularly preferably at least one selected from Al, Ga and In, depending on the kind of M. When M contains Sn, J¹ represents further more preferably Al and/or Ga, and particularly preferably Al, from the standpoint of stability and proton conductivity of the metal phosphate. In any cases, it is preferable that J¹ contains at least Al.

Next, a film and a fuel cell to be obtained using the metal phosphate of the present invention will be illustrated. The metal phosphate of the present invention can be used as a solid electrolyte of a fuel cell. For use of the metal phosphate of the present invention as a solid electrolyte of a fuel cell, it is necessary to form the metal phosphate into a prescribed shape, for example, a molded body or film. Since the metal phosphate of the present invention is often solidified, it is advantageous to once grind this to give a powder. This powder is molded into a prescribed shape or formed into a film, to obtain a solid electrolyte of a fuel cell.

For production of a molded body, it is advantageous to mold a powder under pressure. It is preferable to dehydrate a powder before molding under pressure. Examples of the dehydration method include a method of heating in an inert gas such as argon containing no water vapor.

Examples of a method for producing a film include a method of mixing a powder of the above-described metal phosphate and a binder and molding the mixture under pressure. Examples of the binder include conventional resins, silicon compounds (organosilicon compounds and the like), organic acidic compounds, and from the standpoint of moldability, a fluorine resin is preferably contained. The fluorine resin may be advantageously selected appropriately from conventional fluorine resins, and specific examples thereof include polytetrafluoroethylene and copolymers thereof (tetrafluoroethylene · perfluoroalkyl vinyl ether copolymer, tetrafluoroethylene · hexafluoropropylene copolymer, tetrafluoroethylene · ethylene copolymer, and the like), polyvinylidene fluoride, polychlorotrifluoroethylene, chlorotrifluoroethylene·ethylene copolymer. Of these fluorine resins, polytetrafluoroethylene and polyvinylidene fluoride can be preferably used, and polytetrafluoroethylene can be particularly preferably used.

At least one silicon compounds such as organosilicon compounds may be used as the binder. It is advantageous that the silicon compound is contained in a film by adding the silicon compound in the above-described mixing. The organosilicon compound may be advantageously selected appropriately from conventional compounds, and specific examples thereof include vinylsilanes [allyltriethoxysilane, vinyltrimethoxysilane and the like], aminosilanes, alkylsilanes [1,8-bis(triethoxysilyl)octane, 1,8-bis(diethoxymethylsilyl)octane, n-octyltriethoxysilane], 3-(trihydroxysilyl)-1-propanesulfonic acid. Preferable among these organosilicon compounds are alkylsilanes having a plurality of silyl groups at the end such as 1,8bis(triethoxysilyl)octane, 1,8bis(diethoxymethylsilyl)octane. A plurality of organosilicon compounds may be used.

At least one organic acidic compounds may be contained as the binder. Examples of the organic acidic compound includes organic sulfonic acid compounds, organic phosphoric acid compounds.

By using the above-described molded body or film as a solid electrolyte of a fuel cell, a fuel cell can be obtained. That is, typically, a fuel cell can be obtained by using a molded body or film of the metal phosphate of the present invention as a solid electrolyte between a couple of anode and cathode. Other constitutional members of a fuel cell (for example, catalyst, fuel feeding part, air feeding part) may be used according to conventional technologies appropriately selected.

### EXAMPLES

The present invention will be illustrated further in detail by examples.

### Example 1

### Synthesis of metal phosphate

143.2 g of SnO₂ (manufactured by Wako Pure Chemical Industries, Ltd.), 3.9 g of Al(OH)₃ (manufactured by Wako Pure Chemical Industries, Ltd.) and 322.7 g of H₃PO₄ (85% concentrated phosphoric acid aqueous solution, manufactured by Wako Pure Chemical Industries, Ltd.) were charged in a beaker, and heated at 300°C by a hot plate while stirring by a magnetic stirrer. Ion exchanged water was appropriately added for controlling viscosity during heating. A viscous paste obtained by heating for 1 hour was charged in an alumina crucible, and heated up to 650°C over a period of 1.5 hours in an electric furnace and kept for 2.5 hours, then, cooled down to room temperature over a period of 1.5 hours, to synthesize a metal phosphate 1. A powder X-ray diffraction pattern of the metal phosphate 1 was shown in Fig. 2.

### Pellet molding

The metal phosphate 1 was scraped out of the crucible, and ground in an alumina mortar. The resultant powder was filled in a mold, and mono-axially molded, then, molded by CIP (cold isostatic press) under a pressure of 2 t/cm², to obtain pellets.

### Measurement of proton conductivity

The pellet was clipped by platinum foil electrodes, and an impedance spectrum was measured under experiment conditions of
a frequency of 1 MHz to 0.1 Hz and
a voltage of 10 mV
while changing the temperature from 50°C to 300°C, using a four-terminal conductivity measuring apparatus. The values of proton conductivity obtained from this spectrum are shown in Fig. 1. The proton conductivity at 200°C was 0.29 Scm⁻¹.

### Example 2

A metal phosphate 2 was synthesized in the same manner as in Example 1 excepting that 135.6 g of SnO₂ (manufactured by Wako Pure Chemical Industries, Ltd.), 7.8 g of Al(OH)₃ (manufactured by Wako Pure Chemical Industries, Ltd.) and 322.7 g of H₃PO₄ (85% concentrated phosphoric acid aqueous solution, manufactured by Wako Pure Chemical Industries, Ltd.) were used as the raw materials, and pellets were produced and proton conductivity thereof was measured. The results were shown in Fig. 1. The proton conductivity at 200°C was 0.19 Scm⁻¹.

### Example 3

A metal phosphate 3 was synthesized in the same manner as in Example 1 excepting that 7.159 g of SnO₂ (manufactured by Wako Pure Chemical Industries, Ltd.), 0.334 g of AlCl₃ (manufactured by Wako Pure Chemical Industries, Ltd.) and 16.141 g of H₃PO₄ (85% concentrated phosphoric acid aqueous solution, manufactured by Wako Pure Chemical Industries, Ltd.) were used as the raw materials and further, 80 g of ion exchanged water was charged in the beaker, and pellets were produced. A powder X-ray diffraction pattern of the metal phosphate 3 was shown in Fig. 2.

### Example 4

A metal phosphate 4 was synthesized in the same manner as in Example 1 excepting that 7.159 g of SnO₂ (manufactured by Wako Pure Chemical Industries, Ltd.), 0.957 g of Al(NO₃)₃•9H₂O (manufactured by Wako Pure Chemical Industries, Ltd.) and 16.141 g of H₃PO₄ (85% concentrated phosphoric acid aqueous solution, manufactured by Wako Pure Chemical Industries, Ltd.) were used as the raw materials and further, 80 g of ion exchanged water was charged in the beaker, and pellets were produced. A powder X-ray diffraction pattern of the metal phosphate 4 was shown in Fig. 2.

### Example 5

A metal phosphate 5 was synthesized in the same manner as in Example 1 excepting that 7.159 g of SnO₂ (manufactured by Wako Pure Chemical Industries, Ltd.), 0.415 g of In(OH)₃ (manufactured by KOJUNDO CHEMICAL LABORATORY Co. Ltd.) and 16.141 g of H₃PO₄ (85% concentrated phosphoric acid aqueous solution, manufactured by Wako Pure Chemical Industries, Ltd.) were used as the raw materials, further, 80 g of ion exchanged water was charged in the beaker, and pellets were produced and proton conductivity thereof was measured.

### Example 6

A metal phosphate 6 was synthesized in the same manner as in Example 1 excepting that 7.159 g of SnO₂ (manufactured by Wako Pure Chemical Industries, Ltd.), 0.257 g of GaO₂H (KOJUNDO CHEMICAL LABORATORY Co. Ltd.) and 16.141 g of H₃PO₄ (85% concentrated phosphoric acid aqueous solution, manufactured by Wako Pure Chemical Industries, Ltd.) were used as the raw materials, further, 80 g of ion exchanged water was charged in the beaker, and pellets were obtained and proton conductivity thereof was measured.

### Example 7

A metal phosphate 7 was synthesized in the same manner as in Example 1 excepting that 7.159 g of SnO₂ (manufactured by Wako Pure Chemical Industries, Ltd.), 0.475 g of La(OH)₃ (KOJUNDO CHEMICAL LABORATORY Co. Ltd.) and 16.141 g of H₃PO₄ (85% concentrated phosphoric acid aqueous solution, manufactured by Wako Pure Chemical Industries, Ltd.) were used as the raw materials, further, 80 g of ion exchanged water was charged in the beaker, and pellets were obtained and proton conductivity thereof was measured.

### Example 8

In a glove box filled with dry air, 0.50g of the powder of the metal phosphate 1 synthesized in Example 1 was ground by a mortar, and a mixture of 0.035 g of 1,8-bistriethoxysilyloctane (manufactured by GELEST, Inc., SIB1824.0), 0.028 g of 3-trihydroxysilyl-1-propanesulfonic acid (manufactured by GELEST, Inc., SIT8378.3) and 0.125 g of 2-propanol (manufactured by Wako Pure Chemical Industries, Ltd.) was added. Further, 0.015 g of a polytetrafluoroethylene powder (manufactured by DU PONT-MITSUI FLUOROCHEMICALS COMPANY, LTD., PTFE6-J) was added and the resultant mixture was kneaded thoroughly using a mortar until it became an agglomerate, and this was vacuum-packed and drawn using a roller to obtain a film. The film was clipped by platinum foil electrodes, and the proton conductivity was measured in the range from 25°C to 300°C by the same method as in Example 1. The proton conductivity at 25°C was 0.004 Scm⁻¹, and the proton conductivity at 200°C was 0.047 Scm⁻¹.

### Reference 1

A metal phosphate 8 was synthesized in the same manner as in Example 1 excepting that 143.2 g of SnO₂ (manufactured by Wako Pure Chemical Industries, Ltd.), 2.549 g of Al₂O₃ (α-alumina, manufactured by Wako Pure Chemical Industries, Ltd.) and 322.7 g of H₃PO₄ (85% concentrated phosphoric acid aqueous solution, manufactured by Wako Pure Chemical Industries, Ltd.) were used as the raw materials, and pellets were produced and proton conductivity thereof was measured. The results were shown in Fig. 1. The proton conductivity at 250°C was 0.13 Scm⁻¹, and the proton conductivity at 200°C was 0.11 Scm⁻¹. A powder X-ray diffraction pattern of the metal phosphate 8 was shown in Fig. 2.

### Comparative Example 1

A metal phosphate 9 was synthesized in the same manner as in Example 1 excepting that 150.7 g of SnO₂ (manufactured by Wako Pure Chemical Industries, Ltd.) and 322.7 g of H₃PO₄ (85% concentrated phosphoric acid aqueous solution, manufactured by Wako Pure Chemical Industries, Ltd.) were used as the raw materials, and pellets were produced and proton conductivity thereof was measured. The results were shown in Fig. 1.

### INDUSTRIAL APPLICABILITY

The metal phosphate of the present invention has high proton conductivity, is suitably used as a solid electrolyte for fuel cells, and particularly suitably used for a portable electric source to be mounted on an automobile and the like or for a small size stationary electric source. A metal phosphate having high proton conductivity can be produced by a simpler operation according to the production method of the present invention.

## Claims

1. A method for producing a metal phosphate, using a compound containing M, a compound containing J¹, and a compound containing P, as raw materials,
wherein M represents at least one selected from the group consisting of group 4A and group 4B elements in the long form of the periodic table,
J¹ represents at least one selected from the group consisting of group 3A, group 3B, group 5A and group 5B elements in the long form of the periodic table, and
the compound containing J¹ is composed of at least one selected from hydroxides of J¹, halides of J¹ and nitrate of J¹.

2. The production method according to Claim 1, wherein the compound containing P is phosphoric acid.

3. The production method according to Claim 2, comprising the steps of (a) and (b) in this order:
(a) reacting a compound containing M, a compound containing J¹ and phosphoric acid to obtain a reaction product,
(b) thermally treating the reaction product.

4. The production method according to any one of Claims 1 to 3, wherein the compound containing J¹ is a hydroxide of J¹.

5. The production method according to any one of Claims 1 to 4, wherein J¹ contains at least Al.

6. A metal phosphate obtained by the production method according to any one of Claims 1 to 5.

7. A metal phosphate, wherein when a diffraction peak having maximum intensity is referred to as diffraction peakₘₐₓ in a powder X-ray diffraction pattern having a diffraction angle 2θ in the range of 20° to 90° obtained by powder X-ray diffraction measurement using CuKα as a radiation source, the diffraction peakₘₐₓ is present in the range of 21° to 23° of diffraction angle 2θ and the diffraction peak is substantially not present in the range of 25.5° to 26.5° of diffraction angle 2θ.

8. The metal phosphate according to Claim 7, which is a compound containing M, P and O,
wherein M represents at least one selected from the group consisting of group 4A and group 4B elements in the long form of the periodic table,
a part of M is substituted with a dopant element J¹,
J¹ represents at least one selected from the group consisting of group 3A, group 3B, group 5A and group 5B elements in the long form of the periodic table.

9. The metal phosphate according to Claim 8, substantially represented by the formula (3):
M₁₋ₓJ¹ₓP₂O₇ (3)
wherein x in the formula (3) is from not less than 0.001 to not more than 0.5, and M and J¹ have the same meanings as described above.

10. The metal phosphate according to Claim 8 or 9,
wherein J¹ contains at least Al.

11. The metal phosphate according to any one of Claims 8 to 10, wherein J¹ represents Al.

12. The metal phosphate according to any one of Claims 8 to 11, wherein M represents at least one selected from the group consisting of Sn, Ti, Si, Ge, Pb, Zr and Hf.

13. The metal phosphate according to any one of Claims 8 to 12, wherein M represents Sn.

14. A film comprising the metal phosphate according to any one of Claims 6 to 13, and a binder.

15. The film according to Claim 14, wherein the binder is a fluorine resin.

16. The film according to Claim 15, wherein the fluorine resin is polytetrafluoroethylene.

17. A fuel cell comprising as a solid electrolyte the metal phosphate according to any one of Claims 6 to 13 or the film according to any one of Claims 14 to 16.
